# FASCICULE DE BREVET EUROPEEN

(11) **EP 1 991 504 B1**
(45) Date de publication et mention de la délivrance du brevet: **17.02.2016**
(21) Numéro de dépôt: 07704650.6
(22) Date de dépôt: 19.02.2007
(51) Int. Cl.: C02F 1/52, C02F 1/38, B04C 11/00, C02F 1/00, B03B 5/34, B04C 3/04, B04C 5/081, G05D 9/00

(54) **INSTALLATION ET PROCEDE DE TRAITEMENT D'EAU PAR FLOCULATION DECANTATION A FLOC LESTE AVEC DESSABLAGE FINAL DES BOUES**
ANLAGE UND VERFAHREN ZUR WASSERBEHANDLUNG DURCH AUSFLOCKEN/ABSETZEN UNTER VERWENDUNG VON BALLASTIERTEN FLOCKEN MIT ABSCHLIESSENDEM ENTSANDEN DES SCHLAMMS
PLANT AND METHOD FOR WATER TREATMENT BY FLOCCULATION/SETTLING USING BALLASTED FLOC WITH FINAL DEGRITTING OF THE SLUDGE

(30) Priorité: 20.02.2006 FR 0601485
(43) Date de publication de la demande: 19.11.2008
(73) Titulaire: Veolia Water Solutions & Technologies Support, 94410 Saint-Maurice (FR)
(72) Inventeur: SAUVIGNET, Philippe, F-35460 Saint-Etienne-en-Cogles (FR)
(74) Mandataire: Vidon Brevets & Stratégie
(86) Numéro de dépôt international: PCT/EP2007/051575
(87) Numéro de publication internationale: WO 2007/096337

(56) Documents cités:
- EP-A2- 0 767 143
- WO-A-03/053862
- JP-A- 10 151 373

## Description

L'invention concerne le domaine du traitement des eaux, notamment en vue de leur épuration.

Plus précisément, l'invention se rapporte au traitement des eaux par floculation décantation à floc lesté d'un matériau granulaire.

Les procédés mettant en oeuvre un tel traitement sont connus de l'homme de l'art. Ces procédés permettent la réalisation d'unités de décantation particulièrement compactes, du fait de la construction du floc à décanter autour d'un matériau granulaire fin, inerte, et plus dense que l'eau, qui permet de porter les vitesses de décantation du floc à des valeurs importantes, dépassant 15 m/h et pouvant aller jusqu'à plus de 100 m/h.

Le matériau granulaire employé dans de tels procédés est généralement du sable fin, de diamètre compris usuellement entre 40 et 300 micromètres, plus fréquemment entre 80 et 200 micromètres.

Plus précisément de tels procédés consistent à faire passer, après coagulation en ligne ou dans une zone de coagulation, l'eau à traiter dans au moins une zone de mélange agitée dans laquelle sont injectés au moins un réactif floculant et le matériau granulaire de lest, qui est généralement du sable et qui est dénommé comme tel ci-après. L'eau passe alors dans une zone de décantation, préférentiellement après passage dans une zone intermédiaire agitée dans laquelle se termine la floculation. Le floc, constitué de boues floculées autour de grain(s) de sable, décante rapidement dans la zone de décantation, équipée ou non de lamelles, est repris en fond de la zone de décantation et envoyé, généralement par pompage et tuyauterie de transport, sur un ou plusieurs organes de séparation sable/boue. Ces organes de séparation sont usuellement constitués d'hydrocyclones. Les boues en excès extraites de l'organe de séparation (par exemple en surverse de l'hydrocyclone) sont envoyées, débarrassées de leur sable, vers le traitement des boues tandis que le sable (extrait en sousverse de l'hydrocyclone par exemple), est recyclé vers la zone de mélange. L'eau traitée est quant à elle envoyée vers l'aval par la surverse de décantation.

Ce type de procédé de l'art antérieur constitue en fait un bon piège à sable, dans la mesure où l'ensemble des boues extraites du procédé passe dans un hydrocyclone dessableur. En pratique, ce type de procédé permet usuellement de limiter à moins de 3 grammes de sable par mètre cube d'eau traitée les pertes en sable dans les boues. Compte tenu d'un taux d'extraction des boues variant généralement entre 5% et 15% du débit d'eau à traiter, c'est donc un maximum d'environ 20 à 60 grammes de sable qui partent par mètre cube de boues extraites, ce qui est peu par rapport, par exemple, au taux de sable présent dans les boues primaires de décantation (30% pour les boues provenant des procédés de traitement des eaux usées et jusqu'à 80% à 90 % pour les boues provenant des procédés de potabilisation d'eau).

Néanmoins, il peut arriver que du sable s'échappe exceptionnellement des organes de séparation sable - boue (en cas de bouchage de la sousverse d'un hydrocyclone principalement). Les boues présentent alors un taux de sable plus élevé, ce qui peut entraîner des risques de bouchage, d'abrasion et d'usure mécanique des équipements de traitement des boues et conduire à la nécessité d'extraire ce sable des boues avant traitement de celles-ci.

L'objectif principal de l'invention est de résoudre ce problème technique, c'est-à-dire de minimiser les risques de passage vers le traitement des boues du matériau granulaire utilisé en tant que lest dans les boues extraites d'une installation de traitement d'eau par floculation décantation à floc lesté.

Un autre objectif de la présente invention est de fournir une combinaison de la décantation à floc lesté avec un dispositif permettant d'éliminer le matériau de lest des boues des ouvrages de floculation décantation à floc lesté, dispositif qui soit à la fois peu onéreux et efficace, et permette une automatisation facile de son fonctionnement ainsi que de l'extraction et la recirculation vers l'ouvrage de floculation décantation des sables extraits des boues.

Ces objectifs sont atteints grâce à l'invention qui concerne une installation de traitement d'eau comprenant des moyens d'amenée d'eau à traiter vers au moins une zone de mélange, des moyens d'injection d'au moins un réactif floculant dans ladite zone de mélange, des moyens d'injection d'au moins un matériau granulaire fin plus dense que l'eau formant lest dans ladite zone de mélange, une zone de décantation, des moyens d'évacuation du mélange de matériau granulaire et de boue formé dans ladite zone de décantation vers au moins un organe de séparation du matériau granulaire et des boues dudit mélange, des moyens d'évacuation de l'eau clarifiée de ladite zone de décantation, des moyens d'évacuation des boues en excès séparées par ledit au moins un organe de séparation, des premiers moyens de recyclage du matériau granulaire séparé par ledit au moins un organe de séparation vers ladite zone de mélange, caractérisée en ce qu'elle inclut au moins un dispositif de piégeage dudit matériau granulaire prévu sur lesdits moyens d'évacuation des boues provenant dudit au moins un organe de séparation matériau granulaire/boue et en ce qu'elle inclut des second moyens de recyclage du matériau granulaire piégé par ledit dispositif de piégeage vers ladite zone de mélange.

On notera que, de façon classique, l'eau entrant dans une telle installation sera préférentiellement coagulée en amont de celle-ci ou dans une zone de coagulation au sein de celle-ci, prévue en amont de ladite zone de mélange.

Egalement de façon classique, une zone intermédiaire permettant de parfaire la floculation, et préférentiellement munie de moyens d'agitation, sera également prévue entre ladite zone de mélange et ladite zone de décantation.

La zone de décantation pourra quant à elle être pourvue de lamelles favorisant la décantation, comme déjà décrit dans l'art antérieur.

Le dispositif de piégeage et les seconds moyens de recyclage selon la présente invention permettent de minimiser considérablement les pertes en matériau granulaire utilisé en tant que lest (de façon classique du sable de granulométrie inférieure à 300 mm).

Ce dispositif étant simple à réaliser il n'implique de surcroît pas de surcoût important de l'installation qu'il équipe.

On pourra envisager de réaliser ce dispositif de piégeage selon différentes formes. Toutefois de façon particulièrement intéressante celui-ci comprend un corps essentiellement vertical, des moyens d'amenée des boues provenant de l'organe de séparation prévus préférentiellement à la moitié environ de la hauteur de celui-ci, un fond formant essentiellement entonnoir, et des moyens d'évacuation des boues dessablées. Le corps en question pourra être prismatique mais sera préférentiellement cylindrique afin de favoriser l'écoulement du matériau granulaire.

D'une façon préférée entre toutes, lesdits moyens d'amenée des boues provenant de l'organe de séparation seront conçus tangentiellement audit corps de ce dispositif de piégeage.

Selon une variante, lesdits moyens d'évacuation des boues dessablées sont prévus dans la partie supérieure dudit corps cylindrique du dispositif de piégeage.

Selon une autre variante, lesdits moyens d'évacuation des boues dessablées sont prévus dans la partie inférieure dudit corps cylindrique, ce qui permet d'utiliser le dispositif de piégeage en tant qu'épaississeur de boues.

Dans ce cas, celui-ci comprend préférentiellement des moyens d'évacuation des surverses prévus dans la partie supérieure du corps cylindrique et, le cas échéant, des moyens de recyclage desdites surverses vers ladite zone de mélange.

Avantageusement, le fond de ce dispositif est essentiellement conique ou tronconique et préférentiellement l'angle des génératrices du fond avec l'horizontale est compris entre 45° et 60 °.

Selon une variante particulièrement intéressante de l'invention, ledit dispositif de piégeage est pourvu d'une vanne commandant la mise en communication de l'intérieur de celui-ci avec lesdits seconds moyens de recyclage. Egalement préférentiellement, le dispositif de piégeage est pourvu d'au moins un capteur de la hauteur de matériau granulaire dans le corps ou le fond dudit dispositif de piégeage ou de la masse de matériau granulaire présent dans celui-ci. Ce capteur pourra par exemple être de type à lame vibrante, à ultrasons ou sonde infrarouge.

Préférentiellement, l'installation est pourvue de moyens d'ouverture automatique de ladite vanne en fonction d'une grille temporelle ou en fonction des données relevées par ledit capteur. L'ouverture de la vanne pourra ainsi être contrôlée par un temps mort donné entre deux ouvertures, ou par un volume de boues donné passant dans le dispositif de piégeage, ou encore par la mesure de la quantité d'eau ayant transité dans une durée donnée dans l'installation.

La présente invention vise également à couvrir tout procédé de mise en oeuvre d'une installation telle que décrite ci-dessus caractérisé en ce qu'il comprend une étape consistant à faire transiter lesdites eaux dans celle-ci à une vitesse superficielle (ratio du débit entrant sur la surface du plan d'eau) supérieure à 15 m/h et en ce qu'il comprend une étape consistant à faire entrer lesdites boues dans ledit dispositif de piégeage à une vitesse superficielle inférieure à 20 m/h, préférentiellement entre 10 et 15 m/h.

Egalement préférentiellement, un tel procédé comprend aussi une étape consistant à faire transiter le matériau granulaire piégé par ledit dispositif de piégeage vers lesdits seconds moyens de recyclage, en fonction de données temporelles ou relatives à la quantité de matériau granulaire présent dans celui-ci.

Avantageusement, le dispositif de piégeage de matériau granulaire pourra être utilisé comme épaisseur de boues.

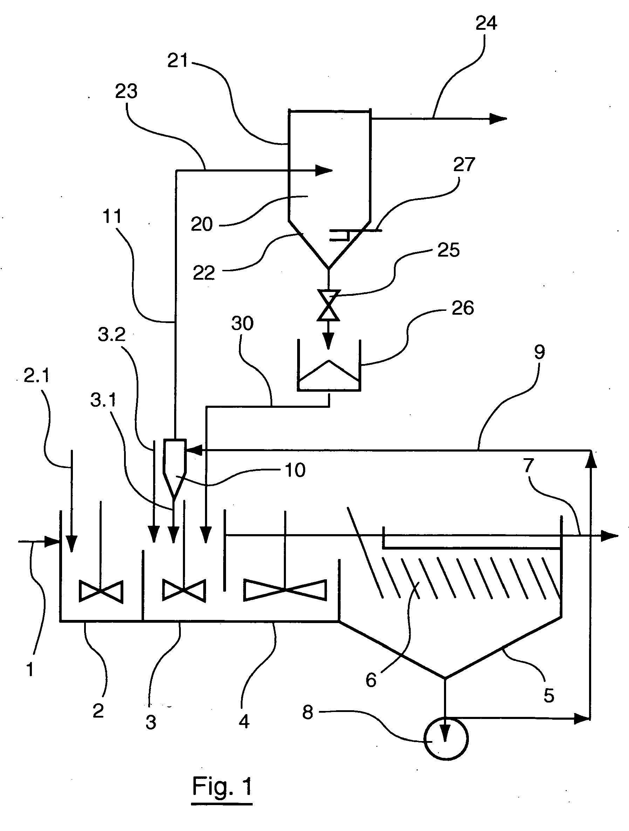

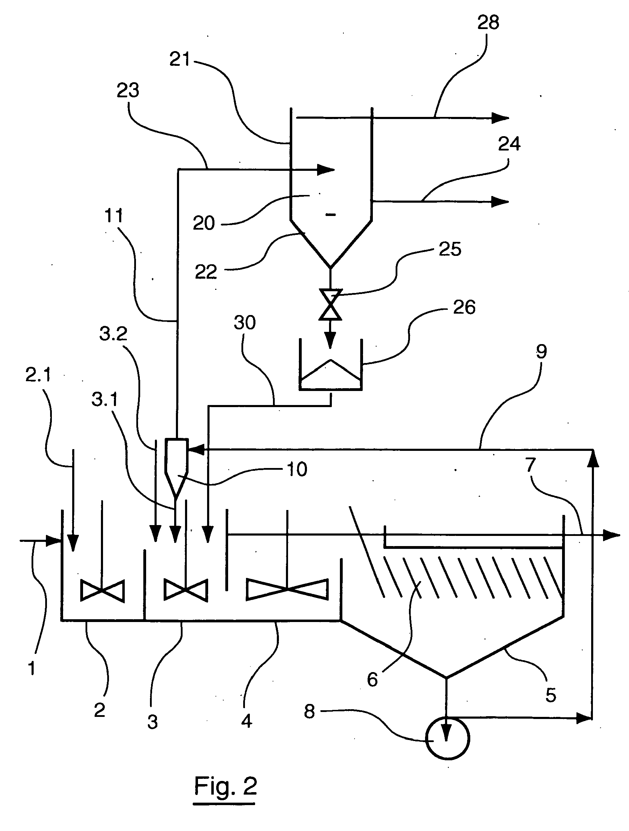

L'invention, ainsi que les différents avantages qu'elle présente sera plus facilement comprise grâce à la description qui va suivre de deux modes non limitatifs de réalisation de celle-ci donnés en référence aux figures 1 et 2.

L'installation décrite sur la figure 1 inclut, de façon classique, des moyens d'amenée 1 d'eau à traiter vers une zone de coagulation 2 pourvue de moyens d'agitation, au moins une zone de mélange 3 pourvue de moyens d'agitation, une zone intermédiaire 3 également pourvu de moyens d'agitation, des moyens d'injection 2.1 d'au moins un réactif coagulant dans ladite zone de coagulation, des moyens d'injection 3.2 d'au moins un réactif floculant dans ladite zone de floculation, des moyens d'injection 3,1 de sable dans ladite zone de mélange 3, une zone de décantation 5 pourvue de lamelles de décantation 6, des moyens d'évacuation 9, incluant des moyens de pompage 8, du mélange de matériau granulaire et de boue formé dans ladite zone de décantation vers un organe de séparation 10 du matériau granulaire et des boues dudit mélange constitué par un hydrocyclone, des moyens d'évacuation 7 de l'eau clarifiée de ladite zone de décantation 5, des moyens d'évacuation 11 des boues en excès séparées par l'hydrocyclone, des premiers moyens de recyclage du matériau granulaire séparé par celui-ci vers ladite zone de mélange, ces moyens étant constitués par les moyens d'amenée de sable 3.1.

Conformément à la présente invention, l'installation est également pourvue d'un dispositif de piégeage 20 du sable prévu sur les moyens d'évacuation 11 des boues provenant de l'hydrocyclone 10.

Le dispositif de piégeage 20 comprend un corps cylindrique 21 vertical avec un fond conique 22, l'angle des génératrices du fond avec l'horizontale étant de 60°. Dans ce mode de réalisation, la surface de section horizontale du corps 20 est de 3.97m².

Les boues arrivent dans le dispositif 20 formant piège à sable par des moyens d'amenée constitués par une tubulure 23 débouchant à environ la moitié environ de la hauteur du corps vertical, de façon tangentielle au corps 21.

La surface de ce corps vertical cylindrique 21 est choisie pour que la vitesse superficielle des boues dans le dispositif 20 soit inférieure à 20m/h, et comprise préférentiellement entre 10m/h et 15m/h. Cette vitesse superficielle correspond au rapport entre le débit de boues en mètres cubes par heures entrant dans le dispositif 20 et la surface en mètres carrés de la section horizontale au niveau de la surface libre dans le corps 21.

Le fond 22 du dispositif 20 est équipé d'une vanne 25, fermée en temps normal, tandis que les boues libres de sable sont extraites, de préférence en partie supérieure 24 du dispositif 20.

Les sables décantent dans le piège ainsi réalisé et s'accumulent dans le fond 22 de celui-ci d'où ils sont périodiquement extraits par ouverture, avantageusement automatisée, de la vanne 25.

Dans ce mode de réalisation, le sable est récupéré dans une benne 26 et renvoyé par des moyens de recyclage 30 vers la zone de mélange 2.

L'ouverture de la vanne 25 est contrôlée par la mesure du niveau de sable décanté dans le piège à sable, à l'aide d'un capteur adapté 27 (capteur à ultrason, ou à lame vibrante, par exemple).

Le temps d'ouverture est fixé pour permettre à l'ensemble du sable décanté de sortir par la vanne 25.

L'installation représentée à la figure 1 a été mise en oeuvre avec un débit d'eau traitée de 1000 m³/h d'eaux usées municipales de type unitaire et avec une vitesse superficielle de décantation dans l'ouvrage de floculation - décantation à floc lesté de 90m/h et un débit de boues extraites de l'hydrocyclone de 50m³/h en moyenne, à 6gMES/litre en moyenne.

La quantité de sable récupéré par le dispositif 20 a été de 1.44 kg/jour (moyenne journalière sur 1 mois, après lavage, séchage, pesage).

Dans le mode de réalisation représentée à la figure 2, sur laquelle des références identiques à celles utilisées en référence à la figure 1 désignent des éléments identiques, le piège à sable 20 sert également d'épaississeur de boues. Dans ce cas, les boues épaissies sont extraites en 24 dans la partie inférieure du dispositif 20, au-dessus de la vanne 25, et à une distance verticale de celle ci suffisante pour permettre l'accumulation du sable, qui décante plus rapidement que les boues, en fond d'ouvrage.

Les surverses de l'épaississeur sont extraites en 28, et éventuellement recyclées en amont de la floculation décantation à floc lesté (recyclage non représenté).

## Revendications

1. Installation de traitement d'eau comprenant des moyens d'amenée (1) d'eau à traiter vers au moins une zone de mélange (3), des moyens d'injection d'au moins un réactif floculant (3.2) dans ladite zone de mélange, des moyens d'injection (3.1) d'au moins un matériau granulaire fin plus dense que l'eau formant lest dans ladite zone de mélange, une zone de décantation (5), des moyens d'évacuation (9) du mélange de matériau granulaire et de boue formé dans ladite zone de décantation vers au moins un organe de séparation (10) du matériau granulaire et des boues dudit mélange, des moyens d'évacuation (7) de l'eau clarifiée de ladite zone de décantation, des moyens d'évacuation (11) des boues en excès séparées par ledit au moins un organe de séparation, des premiers moyens de recyclage du matériau granulaire séparé par ledit au moins un organe de séparation vers ladite zone de mélange,
**caractérisée en ce qu'**elle inclut au moins un dispositif de piégeage (20) dudit matériau granulaire prévu sur lesdits moyens d'évacuation des boues provenant dudit au moins un organe de séparation matériau granulaire/boue,
**en ce que** ledit dispositif de piégeage comprend un corps essentiellement vertical (21), des moyens d'amenée (23) des boues provenant de l'organe de séparation prévus préférentiellement à la moitié environ de la hauteur de celui-ci, un fond (22) formant essentiellement entonnoir et des moyens d'évacuation (24) des boues dessablées,
et **en ce que** ledit dispositif de piégeage (20) est pourvu d'au moins un capteur (27) de la hauteur de matériau granulaire dans le corps (21) ou le fond (22) dudit dispositif de piégeage ou en fonction de la masse de matériau granulaire présent dans celui-ci.

2. Installation selon la revendication 1 **caractérisée en ce qu'**elle inclut des seconds moyens de recyclage (26, 30) du matériau granulaire piégé par ledit dispositif de piégeage vers ladite zone de mélange.

3. Installation selon la revendication 1 ou 2 **caractérisée en ce que** lesdits moyens d'amenée (23) des boues provenant de l'organe de séparation sont conçus tangentiellement audit corps.

4. Installation selon la revendication 3 **caractérisée en ce que** lesdits moyens d'évacuation (24) des boues dessablées sont prévus dans la partie supérieure dudit corps cylindrique (21).

5. Installation selon la revendication 3 **caractérisée en ce que** lesdits moyens d'évacuation (24) des boues dessablées sont prévus dans la partie inférieure dudit corps cylindrique (21).

6. Installation selon la revendication 5 **caractérisé en ce que** le dispositif de piégeage comprend des moyens d'évacuation des surverses (28) prévus dans la partie supérieure du corps cylindrique et, le cas échéant, des moyens de recyclage desdites surverses vers ladite zone de mélange.

7. Installation selon l'une quelconque des revendications 1 à 6 **caractérisée en ce que** ledit corps (21) est essentiellement cylindrique.

8. Installations selon la revendication 7 **caractérisé en ce que** ledit fond (22) est essentiellement conique ou tronconique.

9. Installation selon l'une quelconque des revendications 1 à 8 **caractérisé en ce que** l'angle des génératrices du fond (22) avec l'horizontale est compris entre 45° et 60 °.

10. Installation selon l'une quelconque des revendication 1 à 9 **caractérisée en ce que** ledit dispositif de piégeage (20) est pourvu d'une vanne (25) commandant la mise en communication de l'intérieur de celui-ci avec lesdits seconds moyens de recyclage (26 , 30).

11. Installation selon l'une quelconque des revendications 1 à 10 **caractérisée en ce que** ledit capteur (27) est de type à lame vibrante, à ultrasons ou sonde infrarouge.

12. Installation selon l'une quelconque des revendications 1 à 11 **caractérisée en ce qu'**elle est pourvue de moyens d'ouverture automatique de ladite vanne (25) en fonction d'une grille temporelle ou en fonction des données relevées par ledit capteur (27).

13. Procédé de mise en oeuvre d'une installation selon l'une quelconque des revendications 1 à 12 **caractérisé en ce qu'**il comprend une étape consistant à faire transiter lesdites eaux dans celle-ci à une vitesse superficielle supérieure à 15 m/h et **en ce qu'**il comprend une étape consistant à faire entrer lesdites boues dans ledit dispositif de piégeage à une vitesse superficielle inférieure à 20 m/h.

14. Procédé selon la revendication 13 **caractérisé en ce qu'**il comprend une étape consistant à faire entrer lesdites boues dans ledit dispositif de piégeage à une vitesse superficielle comprise entre 10 et 15 m/h.

15. Procédé selon l'une quelconque des revendications 13 ou 14 **caractérisé en ce qu'**il comprend une étape consistant à faire transiter le matériau granulaire piégé par ledit dispositif de piégeage vers lesdits seconds moyens de recyclage, en fonction de données temporelles ou relatives à la quantité de matériau granulaire présent dans celui-ci.

16. Procédé selon l'une quelconque des revendications 13 à 15 **caractérisé en ce que** le dispositif de piégeage de matériau granulaire est utilisé comme épaisseur de boues.

## Patentansprüche

1. Wasseraufbereitungsanlage, die Mittel (1) zum Heranführen von aufzubereitendem Wasser in Richtung mindestens eines Mischbereichs (3), Mittel (3.2) zum Einbringen mindestens eines Flockungsreagenzes in den Mischbereich, Mittel (3.1) zum Einbringen mindestens eines Feingranulats, welches dichter als Wasser ist und als Ballast dient, in den Mischbereich, einen Absetzbereich (5), Mittel (9) zum Abführen der Mischung aus Granulat und aus Schlamm, welche sich in dem Absetzbereich gebildet hat, in Richtung mindestens eines Organs (10) zum Trennen des Granulats vom Schlamm der Mischung, Mittel (7) zum Abführen des geklärten Wassers aus dem Absetzbereich, Mittel (11) zum Abführen des überschüssigen Schlamms, welcher von dem mindestens einen Trennorgan abgetrennt wurde, erste Mittel zum Rückführen des Granulats, welches von dem mindestens einen Trennorgan abgetrennt wurde, in Richtung des Mischbereichs, umfasst,
**dadurch gekennzeichnet, dass** sie mindestens eine Vorrichtung (20) zum Rückhalten des Granulats umfasst, wobei diese an den Mitteln zum Abführen des Schlamms, welcher aus dem mindestens einen Granulat/Schlamm-Trennorgan stammt, eingerichtet ist,
dadurch, dass die Rückhaltevorrichtung einen im Wesentlichen vertikalen Körper (21), Mittel (23) zum Heranführen des Schlamms, welcher aus dem Trennorgan stammt, wobei diese vorzugsweise auf halber Höhe derselben eingerichtet sind, einen Boden (22), welcher im Wesentlichen trichterförmig ist, und Mittel (24) zum Abführen des entsandeten Schlamms umfasst,
und dadurch, dass die Rückhaltevorrichtung (20) mit mindestens einem Sensor (27) ausgestattet ist, der den Höhenstand des Granulats im Körper (21) oder auf dem Boden (22) der Rückhaltevorrichtung oder in Abhängigkeit von der Masse des darin befindlichen Granulats erfasst.

2. Anlage nach Anspruch 1, **dadurch gekennzeichnet, dass** sie zweite Mittel (26, 30) zum Rückführen des Granulats, welches von der Rückhaltevorrichtung zurückgehalten wurden, in Richtung des Mischbereichs umfasst

3. Anlage nach Anspruch 1 oder 2, **dadurch gekennzeichnet, dass** die Mittel (23) zum Heranführen des Schlamms, welcher aus dem Trennorgan stammt, derart ausgelegt sind, dass sie tangential zum Körper sind.

4. Anlage nach Anspruch 3, **dadurch gekennzeichnet, dass** die Mittel (24) zum Abführen des entsandeten Schlamms im oberen Abschnitt des zylindrischen Körpers (21) eingerichtet sind.

5. Anlage nach Anspruch 3, **dadurch gekennzeichnet, dass** die Mittel (24) zum Abführen des entsandeten Schlamms im unteren Abschnitt des zylindrischen Körpers (21) eingerichtet sind.

6. Anlage nach Anspruch 5, **dadurch gekennzeichnet, dass** die Rückhaltevorrichtung Mittel (28) zum Abführen des Überlaufs umfasst, welche im oberen Abschnitt des zylindrischen Körpers eingerichtet sind, sowie gegebenenfalls Mittel zum Rückführen des Überlaufs in Richtung des Mischbereichs.

7. Anlage nach einem beliebigen der Ansprüche 1 bis 6, **dadurch gekennzeichnet, dass** der Körper (21) im Wesentlichen zylindrisch ist.

8. Anlagen nach Anspruch 7, **dadurch gekennzeichnet, dass** der Boden (22) im Wesentlichen kegelförmig oder kegelstumpfförmig ist.

9. Anlage nach einem beliebigen der Ansprüche 1 bis 8, **dadurch gekennzeichnet, dass** der Winkel, welchen die Erzeugenden des Boden (22) und die Horizontale einschließen, im Bereich von 45° bis 60° liegt.

10. Anlage nach einem beliebigen der Ansprüche 1 bis 9, **dadurch gekennzeichnet, dass** die Rückhaltevorrichtung (20) mit einem Ventil (25) ausgestattet ist, welches eine Steuerfunktion derart ausübt, dass das Innere derselben mit den zweiten Rückführungsmitteln (26, 30) in Verbindung gesetzt werden kann.

11. Anlage nach einem beliebigen der Ansprüche 1 bis 10, **dadurch gekennzeichnet, dass** der Sensor (27) seiner Bauart nach mit einer Schwinggabel, mit Ultraschall oder mit einer Infrarotsonde betrieben wird.

12. Anlage nach einem beliebigen der Ansprüche 1 bis 11, **dadurch gekennzeichnet, dass** sie mit Mitteln zum automatischen Öffnen des Ventils (25) in Abhängigkeit von einem Zeitschema oder in Abhängigkeit von den Daten, welche vom Sensor (27) erfasst werden, ausgestattet ist.

13. Verfahren für den Einsatz einer Anlage nach einem beliebigen der Ansprüche 1 bis 12, **dadurch gekennzeichnet, dass** es einen Schritt umfasst, der darin besteht, das Wasser mit einer Oberflächengeschwindigkeit von mehr als 15 m/Std. durch diese hindurchzuleiten, und dadurch, dass es einen Schritt umfasst, der darin besteht, den Schlamm mit einer Oberflächengeschwindigkeit von weniger als 20 m/Std. in die Rückhaltevorrichtung einzuleiten.

14. Verfahren nach Anspruch 13, **dadurch gekennzeichnet, dass** es einen Schritt umfasst, der darin besteht, den Schlamm mit einer Oberflächengeschwindigkeit im Bereich von 10 bis 15 m/Std. in die Rückhaltevorrichtung einzuleiten.

15. Verfahren nach einem beliebigen der Ansprüche 13 oder 14, **dadurch gekennzeichnet, dass** es einen Schritt umfasst, der darin besteht, das Granulat, welches von der Rückhaltevorrichtung zurückgehalten wurde, in Abhängigkeit von Daten, die zeitbezogen sind oder die Menge an darin befindlichem Granulat betreffen, in Richtung der zweiten Rückführungsmittel zu leiten.

16. Verfahren nach einem beliebigen der Ansprüche 13 bis 15, **dadurch gekennzeichnet, dass** die Vorrichtung zum Zurückhalten von Granulat als Schlammdicke verwendet wird.

## Claims

1. Water treatment plant comprising means (1) for supplying water to be treated towards at least one mixing zone (3), means for injecting at least one flocculating agent (3.2) into said mixing zone, means (3.1) for injecting into said mixing zone at least one fine granular ballast material which is denser than water, a settling zone (5), means (9) for discharging the mixture of granular material and sludge formed in said settling zone towards at least one unit (10) for separating the granular material and the sludge of said mixture, means (7) for discharging the clarified water from said settling zone, means (11) for discharging the excess sludge separated by said at least one separating unit, and first means for recycling the granular material separated by said at least one separating unit towards said mixing zone,
**characterized in that** said plant includes at least one device (20) for trapping said granular material that is provided on said means for discharging the sludge originating from said at least one granular material/sludge separating unit,
**in that** said device for trapping the granular material comprises an essentially vertical body (21), means (23) for supplying the sludge originating from the separating unit preferentially provided at approximately half of the height of the said body, a base (22) essentially forming a funnel, and means (24) for discharging the degritted sludge,
**in that** said trapping device (20) is provided with at least one sensor (27) of the granular material height in the body (21) or the base (22) of said trapping device or the granular material mass present therein.

2. Plant according to claim 1 **characterized in that** it includes second recycling means (26, 30) of the granular material trapped by said trapping device towards said mixing zone.

3. Plant according to claim 1 or 2 **characterised in that** said means (23) for supplying the sludge originating from the separating unit will be devised tangentially to said body.

4. Plant according to claim 3 **characterized in that** said means (24) for discharging the degritted sludge are provided in the upper part of said cylindrical body (21).

5. Plant according to claim 3 **characterized in that** said means (24) for discharging the degritted sludge are provided in the lower part of said cylindrical body (21).

6. Plant according to claim 5 **characterized in that** the trapping device comprises means for discharging the overflows (28) provided in the upper part of the cylindrical body and, if applicable, means for recycling said overflows towards said mixing zone.

7. Plant according to any of claims 1 to 6 **characterized in that** said body (21) is essentially cylindrical.

8. Plants according to claim 7 **characterized in that** said base (22) is essentially conical or tapered.

9. Plant according to any of claims 1 to 8 **characterized in that** the angle of the generatrices of the base (22) with the horizontal is between 45° and 60°.

10. Plant according to any of claims 1 to 9 **characterized in that** said trapping device (20) is provided with a valve (25) controlling the communication of the inside of said device with said second recycling means (26, 30).

11. Plant according to any of claims 1 to 10 **characterized in that** said sensor (27) is of the vibrating blade, ultrasound or infrared sounder type.

12. Plant according to any of claims 1 to 11, **characterized in that** it is provided with means for the automatic opening of said valve (25) as a function of a time grid or as a function of the data recorded by said sensor (27).

13. Method implementing a plant according to any of claims 1 to 11 **characterized in that** it comprises a step consisting of transiting said water in said plant at a surface velocity greater than 15 m/hour and **in that** it comprises a step consisting of transiting said sludge into said trapping device at a surface velocity less than 20 m/hour.

14. Method according to claim 13 **characterized in that** it comprises a step consisting of transiting said sludge into said trapping device at a surface velocity ranging between 10 and 15 m/hour.

15. Method according to any of claims 13 or 14, **characterized in that** it comprises a step consisting of transiting the granular material trapped by said trapping device towards said second recycling means, as a function of time data or data relating to the quantity of granular material present in said device.

16. Method according to any of claims 13 to 15, **characterized in that** the device for trapping the granular material is used as a sludge densifier.
